# EUROPÄISCHE PATENTSCHRIFT

(11) **EP 0 588 234 B1**
(45) Veröffentlichungstag und Bekanntmachung des Hinweises auf die Patenterteilung: **04.12.1996**
(21) Anmeldenummer: 93114484.4
(22) Anmeldetag: 09.09.1993
(51) Int. Cl.: H02P 3/06, H02P 3/04, B66C 13/28

(54) **Notabsenkung für einen Hubwerkantrieb**
Emergency pull down for a lifting device
Abaissement d'urgence pour un dispositif de levage

(30) Priorität: 12.09.1992 DE 4230593
(43) Veröffentlichungstag der Anmeldung: 23.03.1994
(73) Patentinhaber: ABUS Kransysteme GmbH, 51647 Gummersbach (DE)
(72) Erfinder: Bube, Eckhard, D-51647 Gummersbach (DE); Bühne, Werner, D-51647 Gumemrsbach (DE)
(74) Vertreter: Hassler, Werner, Dr.

(56) Entgegenhaltungen:
- DE-A- 1 531 197
- DE-A- 2 237 233
- DE-C- 934 780
- GB-A- 1 390 432
- PATENT ABSTRACTS OF JAPAN vol. 11, no. 55 (E-481) (2502) 20. Februar 1987 & JP-A-61 214 783 (HITACHI LTD) 24. September 1986

## Beschreibung

Die Erfindung betrifft eine Notabsenkung für einen Hubwerkantrieb mit einem Drehstromasynchronmotor und einer elektromagnetisch betätigbaren Bremse mit Lösevorrichtung.

Hubwerkantriebe, insbesondere für Hebezeuge arbeiten normalerweise mit einem Drehstromasynchronmotor als Kurzschlußläufer wegen der Robustheit und Langlebigkeit dieses Motors. Allerdings ist eine Bremse erforderlich, um den Antrieb im Stillstand des Motors zu blockieren und dadurch ein ungewolltes Absinken der Last auszuschalten. Die Bremse ist normalwerseise eine elektromagnetisch betätigbare Haltebremse.

Die DE-A-1 531 197 beschreibt eine Senkbremsung für einen Asynchronmotor eines Hebezeugs der eingangs genannten Art. Zwar ist eine Umschaltung des Motors auf Generatorbetrieb vorgesehen, jedoch ist ein solcher Generatorbetrieb nur unter Anschaltung an das Versorgungsnetz möglich, weil dem Netz die Blindströme entnommen werden. Bei Ausfall der Netzspannung ist also diese Senkbremsung unwirksam.

Die GB-A-1 390 432 beschreibt eine elektrodynamische Bremsvorrichtung für einen Induktionsmotor durch Zuschaltung von Kondensatoren und Widerständen. Hierdurch wird eine Abbremsung des Motors bei Netzausfall erzielt. Zur Lastabsenkung bei einem Hubwerk ist diese Schaltung unmittelbar geeignet.

In vielen Fällen besteht die Forderung, daß die Last auch bei Spannungsausfall sicher abgesenkt werden kann. Eine mechanische Betätigung der Bremse führt zu einer hohen Beanspruchung derselben und ist deshalb unerwünscht. Ein stromloser Senkbetrieb bei Netzausfall ist nicht möglich, da der Motor nicht generatorisch arbeitet und so das Absenken unkontrollierbar ist.

Aufgabe der Erfindung ist die Sicherung eines kontrollierten Absenkens der Last auch bei einem Störfall durch Netzausfall oder Spannungsunterbrechung.

Diese Aufgabe wird nach der Erfindung dadurch gelöst, daß eine bei Netzausfall umschaltbare Schaltvorrichtung (11) dem Motor (1) Schaltkreise (9, 10) für einen netzunabhänmgigen Generatorbetrieb desselben zuschaltet und daß eine netzunabhängige Stromversorgung mit einem von einer Ladeeinrichtung gespeisten Akkumulator (5) für die Lösevorrichtung (4) vorgesehen ist.

Die Erfindung unterscheidet sich insofern vom Stand der Technik, als bei Netzausfall durch Zuschaltung von Schaltkreisen ein Generatorbetrieb des Motors sichergestellt ist. Diese elektrodanimsche Bremsung wird nach Lösen der Bremse wirksam. Die generatorisch erzeugte Bremsleistung wird in den zugeschalteten Schaltkreisen aufgenommen, so daß der Motor im Notbetrieb eine Bremsleistung aufbringt. Der Motor stellt sich auf einen stationären Arbeitspunkt und damit eine stabile Drehzahl ein. Die netzunabhängige Stromversorgung der Bremse macht ein Lösen derselben und damit eine Notabsenkung der Last jederzeit möglich.

Die Umschaltung im Störfall kann dadurch automatisch erfolgen, daß ein die Versorgungsspannung überwachender Spannungsüberwachungskreis für eine automatische Betätigung der Schaltvorrichtung vorgesehen ist.

Ein stationärer Generatorbetrieb wird dadurch sichergestellt, daß die Schaltkreise einerseits phasenverschiebende Schaltelemente zur Bereitstellung der Blindströme und andererseits Lastwiderstände enthalten.

Der Ladezustand des Akkumulators wird dadurch sichergestellt, daß die Ladeeinrichtung einen Selbstüberwachungskreis mit einer Fehleranzeige umfaßt. Damit ist ein Lösen der Bremse bei einem Störfall immer gewährleistet.

Ein Ausführungsbeispiel der Erfindung wird im Folgenden anhand eines Schaltbildes erläutert.

Die Erregerwicklungen 2 eines Drehstromasynchronmotors 1 sind an die Phasenleiter L₁, L₂, L₃ angeschlossen. Eine elektromagnetisch betätigbare Bremse 3 ist über einen DC/DC-Wandler 4 an einen Akkumulator 5 als netzunabhängige Stromversorgung angeschlossen. Der DC/DC-Wandler erhöht die Spannung des Akkumulators 5 auf einen Wert, der zur Betätigung der Bremse 3 ausreicht. Der Akkumulator 5 wird von der Netzspannung ständig nachgeladen. Eine Ladeeinrichtung für den Akkumalator 5 umfaßt einen Selbstübenwachungskreis. Damit wird insbesondere der Ladezustand und die Funktionstähigkeit des Akkumulators ständig überwacht. Dadurch ist dessen Einsatzbereitschaft im Störfall gesichert. Ein Schalter 6 dient zur Einschaltung des DC/DC-Wandlers 4, so daß der Ausgangsstrom desselben die elektromagnetisch betätigbare Bremse 3 löst.

jeweils über Schaltkontakte 7 beziehungsweise 8 sind Kondensatoren 9 zur Lieferung des Blindstromes sowie Widerstände 10 als Bremswiderstände mit den Erregerwicklungen 2 des Drehstromasynchronmotors verbunden. Damit ist ein stabiler netzunabhängiger Generatorbetrieb in einem stationären Arbeitspunkt möglich. Die Schaltkontakte 7 und 8 werden von einer Schaltvorrichtung 11 direkt oder indirekt betätigt. Die Schaltvorrichtung 11 hat einen Schaltknopt 12 für Handbetätigung und/oder enthält einen Spannungsüberwachungskreis für die Netzspannung, der die Schaltvorrichtung automatisch beim Ausfall der Netzspannung auslöst.

Solange die Netzspannung vorhanden ist, sind die Kontakte 7 und 8 abgehoben, so daß der Drehstromasynchronmotor 1 als Motor arbeitet. Die elektromagnetisch betätigbare Bremse 3 ist geöffnet. Der Akkumulator 5 wird vom Netz geladen. Der Ladezustand wird überwacht.

Bei einem Netzausfall oder einem eine Schwelle überschreitenden Spannungsabfall wird die Schaltvorrichtung 11 durch Handbetätigung oder automatisch durch den Spannungsüberwachungskreis ausgelöst. Die Kondensatoren 9 und die Bremswiderstände 10 werden an den Drehstromasynchronmotor 1 angeschaltet, so daß derselbe als Generator in einer netzunabhängigen Schaltung arbeitet. Es stellt sich entstrechend der Belastung ein stationärer Arbeitspunkt ein.

Für die Notabsenkung einer Last wird durch Betätigung des Schalters 6 die Bremse 3 geöffnet, so daß ein Absenken der Laste möglich ist. Dabei arbeitet der Motor 1 als Generator. Die Bremswiderstände 10 nehmen die beim Absenken freiwerdende Energie auf. Somit ist jederzeit eine Notabsenkung einer Last möglich. Dadurch lassen sich auch bei einem Netzausfall Gefahrzustände vermeiden.

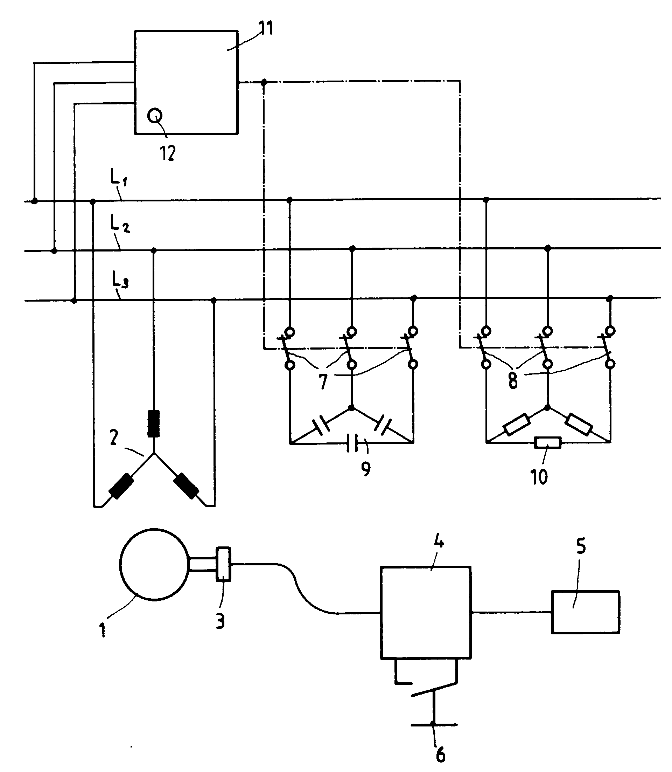

## Patentansprüche

1. Notabsenkung für einen Hubwerkantrieb mit einem Drehstromasynchronmotor (1) und einer elektromagnetisch betätigbaren Bremse (3) mit Lösevorrichtung, dadurch gekennzeichnet, daß eine bei Netzausfall umschaltbare Schaltvorrichtung (11) dem Motor (1) Schaltkreise (9, 10) für einen netzunabhänmgigen Generatorbetrieb desselben zuschaltet und daß eine netzunabhängige Stromversorgung mit einem von einer Ladeeinrichtung gespeisten Akkumulator (5) für die Lösevorrichtung (4) vorgesehen ist.

2. Notabsenkung nach Anspruch 1, dadurch gekennzeichnet, daß ein die Versorgungsspannung überwachender Spannungsüberwachungskreis für eine automatische Betätigung der Schaltvorrichtung (11) vorgesehen ist.

3. Notabsenkung nach Anspruch 1 oder 2, dadurch gekennzeichnet, daß die Schaltkreise (9 und 10) einerseits phasenverschiebende Schaltelemente zur Bereitstellung der Blindströme und andererseits Lastwiderstände enthalten.

4. Notabsenkung nach einem der Ansprüche 1 bis 3, dadurch gekennzeichnet, daß die Ladeeinrichtung einen Selbstüberwachungskreis mit einer Fehleranzeige umfaßt.

## Claims

1. An emergency lowering device for a lifting mechanism drive, having a three-phase asynchronous motor (1) and an electromagnetically actuable brake (3) having a release device, characterized in that a switching device (11), which may be switched over in the event of power failure, connects to the motor (1) switching circuits (9, 10) for generator operation of the motor (1) in a manner independent of the mains supply, and in that there is provided for the release device (4) a power supply independent of the mains supply, having an accumulator (5) fed by a charging device.

2. An emergency lowering device according to Claim 1, characterized in that there is provided for automatic actuation of the switching device (11) a voltage monitering circuit monitoring the supply voltage.

3. An emergency lowering device according to Claim 1 or 2, characterized in that the switching circuits (9 and 10) contain on the one hand phase-shifting switch elements for making the reactive currents available, and on the other hand load resistors.

4. An emergency lowering device according to one of Claims 1 to 3, characterized in that the charging device comprises a self-monitoring circuit having a fault display.

## Revendications

1. Abaissement d'urgence pour un dispositif de levage avec un moteur (1) asynchrone triphasé et un frein (3) actionné électromagnétiquement avec dispositif de desserrage, caractérisé en ce qu'un dispositif de commutation (11) réversible en cas de défaillance du réseau raccorde au moteur (1) des circuits de commutation (9, 10) pour un régime en génératrice indépendant du réseau de ce même moteur et qu'une alimentation en courant indépendante du réseau est prévue avec un accumulateur (5) alimenté par un dispositif de charge pour le dispositif de desserrage (4).

2. Abaissement d'urgence selon la revendication 1, caractérisé en ce qu'un circuit de surveillance de la tension d'alimentation est prévu pour une commande automatique du dispositif de commutation (11).

3. Abaissement d'urgence selon la revendication 1 ou 2, caractérisé en ce que les circuits de commutation (9 ou 10) comprennent, d'une part, des éléments de commutation déphaseurs pour l'application des courants déwattés et, d'autre part, des résistances de charge.

4. Abaissement d'urgence selon une des revendications 1 à 3, caractérisé en ce que le dispositif de charge comprend un circuit d'autosurveillance avec une signalisation des malfonctionnements.
